# EUROPÄISCHE PATENTSCHRIFT

(11) **EP 1 957 333 B1**
(45) Veröffentlichungstag und Bekanntmachung des Hinweises auf die Patenterteilung: **09.09.2009**
(21) Anmeldenummer: 06819457.0
(22) Anmeldetag: 14.11.2006
(51) Int. Cl.: B60T 8/48, B60T 7/12

(54) **VERFAHREN UND VORRICHTUNG ZUR DURCHFÜHRUNG EINER STILLSTANDSHALTEFUNKTION BEI EINEM KRAFTFAHRZEUG**
METHOD AND DEVICE FOR CARRYING OUT A STATIONARY HOLD FUNCTION ON A MOTOR VEHICLE
PROCEDE ET DISPOSITIF PERMETTANT D'EXECUTER UNE FONCTION DE MAINTIEN A L'ARRET D'UN VEHICULE AUTOMOBILE

(30) Priorität: 29.11.2005 DE 102005056758; 18.01.2006 DE 102006002352
(43) Veröffentlichungstag der Anmeldung: 20.08.2008
(73) Patentinhaber: ROBERT BOSCH GMBH, 70442 Stuttgart (DE)
(72) Erfinder: KOLARSKY, Jens, 74321 Bietigheim/Bissingen (DE); MESSNER, Heiner, 71696 Moeglingen (DE); MAHLENBREY, Ulrich, 71679 Asperg (DE); BODMANN, Carsten, 71634 Ludwigsburg (DE); OLIVEIRA, Raphael, 74199 Untergruppenbach (DE); GRELL, Philipp, 74321 Bietigheim-Bissingen (DE); BREGEAULT, Julien, 71696 Moeglingen (DE); UNBESCHEIDEN, Mark, 71706 Markgroeningen (DE)
(86) Internationale Anmeldenummer: PCT/EP2006/068436
(87) Internationale Veröffentlichungsnummer: WO 2007/062978

(56) Entgegenhaltungen:
- WO-A-02/090159
- DE-A1- 10 343 985
- DE-C1- 10 144 879

## Beschreibung

### Stand der Technik

Die Erfindung betrifft ein Verfahren zur Ansteuerung eines Ventils zur Aufrechterhaltung von Bremsdruck in einem vorgegebenen Bereich eines Bremskreises bei einem Kraftfahrzeug. Aus der DE 101 44 879 C1 sind ein Verfahren und eine Vorrichtung zur Verbesserung der Druckaufbaudynamik in einem Bremskreis bekannt. Das dort beschriebene Bremssystem ist in der Lage, fahrerunabhängige Bremseingriffe durchzuführen. Dazu wird ein Umschaltventil gesperrt und eine Rückförderpumpe aktiviert.

Aus der WO 02/090159 A1 sind ein Verfahren zum Halten eines Fahrzeugs an einem Hang durch Einsteuern eines Bremsdrucks in die Radbremsen und eine Anfahrhilfe eines Fahrzeugs an einem Hang bekannt. Das Verfahren ist gekennzeichnet durch die Schritte a) Ermitteln des zum Halten erforderlichen Bremsdrucks, b1) Ermitteln einer Zeitspanne nach Maßgabe einer Verringerung des Bremsdrucks, insbesondere aufgrund Leckage der Bremsanlage, ab dem Lösen des Bremspedals oder b2) Vergleichen des ermittelten Bremsdrucks mit dem tatsächlichen Bremsdruck ab dem Lösen des Bremspedals und c) Erhöhen des Bremsdrucks in den Radbremsen durch c1) Einschalten eines Druckerzeugers c2) Öffnen des Schaltventils c) Steuern eines Ventils derart, dass sich mindestens der zum Halten erforderliche Bremsdruck in den Radbremsen einstellt.

Aus der DE 103 43 985 A1 ist ein Verfahren zur Verhinderung des Wegrollens eines Fahrzeugs an einer Steigung bekannt Dazu wird ein analoges oder analogisiertes Ventil verwendet, welches im Stillstand zur Aufrechterhaltung eines Bremsbetätigungsdrucks geschlossen wird. Um Leckagen des Ventils zu vermeiden oder die durch die Leckagen eintretenden Bremsdruckverluste zu reduzieren, ist vorgesehen, dass die Schließkraft des Ventils erhöht wird, wenn das Ventil im Stillstand des Fahrzeugs zur Aufrechterhaltung eines Bremsbetätigungsdrucks geschlossen wird oder wenn das Ventil im Stillstand des Fahrzeugs zur Aufrechterhaltung eines Bremsbetätigungsdrucks geschlossen werden soll.

Die Merkmale der Oberbegriffe der unabhängigen Ansprüche sind der WO 02/090159 A1 entnommen.

### Offenbarung der Erfindung

Die Erfindung betrifft ein Verfahren zur Ansteuerung eines Ventils zur Aufrechterhaltung von Bremsdruck in einem vorgegebenen Bereich eines Bremskreises bei einem Kraftfahrzeug, welches zur Durchführung einer Fahrzeugstillstandshaltefunktion des Kraftfahrzeuges angewandt wird, bei dem
- das Ventil mittels eines ersten Ansteuerverfahrens angesteuert wird,
- der vorgegebene Bereich des Bremskreises bzgl. des Auftretens von Bremsdruckverlust überwacht wird und
- bei einem detektierten Bremsdruckverlust das Ventil mittels eines zweiten Ansteuerverfahrens angesteuert wird.

Die Erfindung ist **dadurch gekennzeichnet, dass**
- das zweite Ansteuerverfahren dann durchgeführt wird, wenn das erste Ansteuerverfahren mehrfach, insbesondere eine vorgegebene Anzahl von Malen, durchgeführt wurde und nach jeder dieser Durchführungen erneut ein Druckverlust detektiert wurde.

Die Ansteuerung mit dem zweiten Verfahren stellt insbesondere eine sicherheitsoptimierte Ansteuerung dar, während die erste Ansteuerung insbesondere eine bzgl. Fahrerkomfort optimierte Ansteuerung darstellt. Durch die Erfindung wird die unkomfortablere, jedoch sicherheitsorientierte Ansteuerung nur dann durchgeführt, wenn sie notwendig ist. Damit ist ein erhöhter Fahrerkomfort gegeben.

Eine vorteilhafte Ausgestaltung der Erfindung ist **dadurch gekennzeichnet,**
- **dass** es sich bei dem Ventil um das Umschaltventil in einem Bremskreis handelt und
- dass es sich bei dem vorgegebenen Bereich um den Bereich zwischen dem Umschaltventil und den Einlassventilen der Radbremszylinder handelt.

Eine vorteilhafte Ausgestaltung der Erfindung ist **dadurch gekennzeichnet,**
- **dass** beim ersten Ansteuerverfahren das Ventil mittels einer vorgegebenen elektrischen Ansteuerung geschlossen wird oder geschlossen gehalten wird und
- dass beim zweiten Ansteuerverfahren das Ventil durch die Ansteuerung wenigstens teilweise wieder geöffnet wird und dann erneut geschlossen wird.
Durch das wenigstens teilweise Öffnen kann die Ventilnadel beim erneuten Schließvorgang kinetische Energie aufnehmen und wird damit beim Schließvorgang noch stärker in den Dichtsitz gepresst.

Eine vorteilhafte Ausgestaltung der Erfindung ist **dadurch gekennzeichnet, dass** bei einem detektierten Druckverlust der Solldruck über einen fahrerunabhängigen Druckaufbau erneut eingestellt wird. Dadurch wird ein ständiges weiteres Absinken des Drucks vermieden.

Eine vorteilhafte Ausgestaltung der Erfindung ist **dadurch gekennzeichnet, dass** bei der ersten Durchführung des ersten Ansteuerverfahrens während einer Druckhaltephase das Ventil geschlossen wird und bei jeder weiteren Durchführung während dieser Druckhaltephase das Ventil geschlossen gehalten wird. Dadurch werden für den Fahrer hörbare Schließgeräusche vermieden.

Eine vorteilhafte Ausgestaltung der Erfindung ist **dadurch gekennzeichnet, dass** bei der ersten Durchführung des ersten Ansteuerverfahrens während einer Druckhaltephase das Ventil geschlossen wird und bei jeder weiteren Durchführung während dieser Druckhaltephase das Ventil geschlossen oder geschlossen gehalten wird, wobei bei diesen weiteren Durchführungen das Ventil mit einem höheren Strom als bei der ersten Durchführung beaufschlagt wird. Die Bestromung mit einem höheren Strom presst die Ventilnadel stärker in den Dichtsitz als zuvor.

Eine vorteilhafte Ausgestaltung der Erfindung ist **dadurch gekennzeichnet, dass** es sich bei der Druckhaltephase um ein Einsperren des Bremsdrucks im Rahmen einer Fahrzeugstillstandshaltefunktion bzw. Stillstandssicherstellungsfunktion des Kraftfahrzeugs handelt.

Eine vorteilhafte Ausgestaltung der Erfindung ist **dadurch gekennzeichnet, dass** es sich bei dem vorgegebenen Bereich um einen Radbremszylinder oder den Bereich zwischen einem Radbremszylinder und dem Einlassventil handelt.

Eine vorteilhafte Ausgestaltung der Erfindung ist **dadurch gekennzeichnet, dass** für den Fall, dass nach Durchführung des zweiten Ansteuerverfahrens das Fahrzeug dennoch anrollt oder weiterrollt, der Bremsdruck fahrerunabhängig erhöht wird.

Eine vorteilhafte Ausgestaltung der Erfindung ist **dadurch gekennzeichnet, dass** der Bremsdruck fahrerunabhängig wenigstens solange erhöht wird, bis sich ein Fahrzeugstillstand einstellt.

Eine vorteilhafte Ausgestaltung der Erfindung ist **dadurch gekennzeichnet, dass** beim Schließen des Ventils nach der Erhöhung des Bremsdrucks das zweite Ansteuerverfahren verwendet wird. Da die Erhöhung des Bremsdrucks über die Rückförderpumpe erfolgt und damit geräuschbehaftet ist, spielt das durch das zweite Ansteuerverfahren entstehende Geräusch keine wesentliche Rolle mehr und kann deshalb akzeptiert werden.

Weiter umfasst die Erfindung eine Vorrichtung zur Ansteuerung eines Ventils zur Aufrechterhaltung von Bremsdruck in einem vorgegebenen Bereich eines Bremskreises bei einem Kraftfahrzeug, enthaltend Mittel, die derart ausgebildet sind, dass eines der Vorstehend beschriebenen Verfahren darin ausgeführt wird.

Die vorteilhaften Ausgestaltungen des erfindungsgemäßen Verfahrens äußern sich auch als vorteilhafte Ausgestaltungen der erfindungsgemäßen Vorrichtung und umgekehrt.

Die Zeichnung umfasst die Figuren 1 bis 3.
Figur 1 zeigt die Topologie eines hydraulischen Bremskreises, auf den die Erfindung anwendbar ist.
Figur 2 zeigt den Ablauf einer Ausführungsform des erfindungsgemäßen Verfahrens.
Figur 3 zeigt den Aufbau der erfindungsgemäßen Vorrichtung.

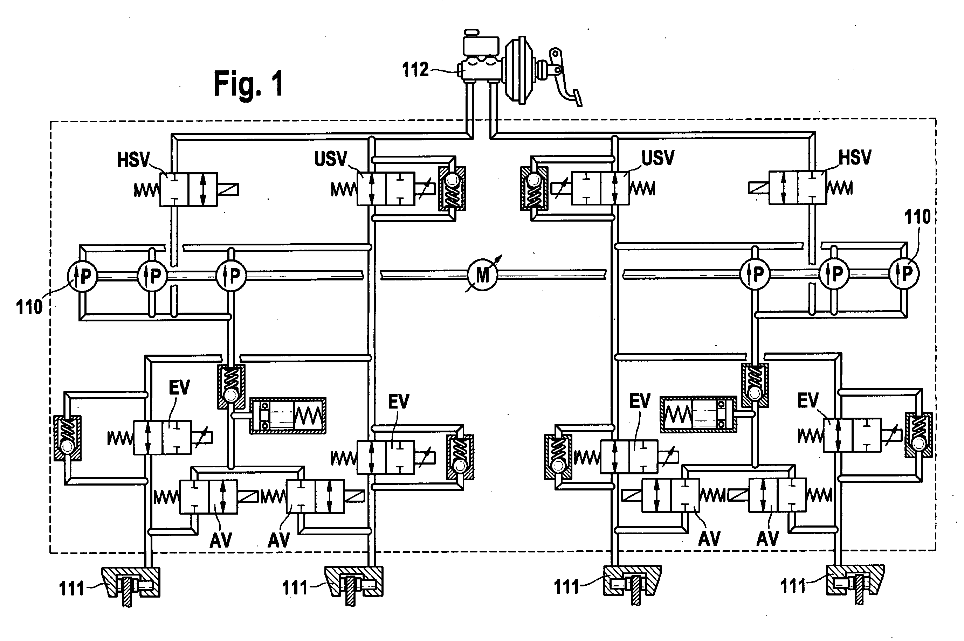

Die Erfindung bezieht sich auf das Sicherstellen einer Funktion, die das Festbremsen eines Fahrzeugs während dessen Stillstands sicher gewährleistet. Dabei steht neben der Sicherheit der Fahrerkomfort im Mittelpunkt, insbesondere sollen eine deutlich spürbare Pedalrückwirkung sowie Geräusche vermieden werden. Als Beispiel wird ein Fahrzeug mit einer konventionellen hydraulischen Bremsanlage betrachtet, wie sie in Fig. 1 dargestellt ist.

Fahrdynamikregelungssysteme umfassen Funktionen, welche ein Abbremsen bzw. Halten des Fahrzeugs bei unbetätigter Bremse durch Einsperren eines Drucks im Bremskreis erfordern. Hierbei muss die Verbindung zwischen dem in Fig. 1 mit 112 bezeichneten Hauptbremszylinder und den mit EV bezeichneten Einlassventilen durch Schließen der mit USV bezeichneten Umschaltventile abgesperrt werden. Über die Dauer einer sich anschließenden Druckhaltephase liegt dann bei unbetätigter Bremse der eingesperrte Bremsdruck als Differenzdruck über dem Umschaltventil an. Eine am Umschaltventil möglicherweise auftretende Leckage könnte zu einem sehr schnellen Druckabfall im Bremskreis führen und erfordert dann einen erneuten Druckaufbau durch die mit 110 bezeichneten Rückförderpumpen. Dieser erneute Druckaufbau ist mit Geräuschen und damit einer Komfortminderung für die Fahrzeuginsassen verbunden.

Die Radbremszylinder sind in Fig. 1 mit 111 gekennzeichnet, AV kennzeichnet die Auslassventile.

Die elektrische Ansteuerung des Umschaltventils während des Schließvorgangs, d.h. der Übergang zur Druckhaltephase, hat einen Einfluss auf die Leckageneigung des Umschaltventils. Diese Leckageneigung kann durch eine optimierte Ansteuerung des Umschaltventils unterdrückt werden.

Ursache für die Leckageneigung ist eine verbleibende minimale Restöffnung des Umschaltventils nach dem Schließvorgang. Diese kann dann auftreten, wenn sich das Umschaltventil sehr langsam schließt, d.h. der Ventilstößel gleitet mit einer sehr geringen Geschwindigkeit in den Ventilsitz. Dabei kann es infolge der Oberflächenrauhigkeiten von Ventilstößel und Ventilsitz zu einem Verhaken des Ventilstößels und einer geringen Restöffnung zwischen Ventilstößel und Ventilsitz kommen. Diese Restöffnung verursacht einen Druckabfall im Bremskreis.

Über Kreisdruckventile, hier die mit USV gekennzeichneten Umschaltventile, wird der Bremsdruck im Rad bzw. Bremskreis eingesperrt. Aufgrund von Undichtigkeiten der Ventilen kann es zu Druckverlusten in den Bremskreisen kommen, welche unter Umständen sogar zum Losrollen des Fahrzeugs führen können. Eine Ventilansteuerung der Umschaltventile, welche zu einem sicheren und leckagefreien Schließen dieser Ventile führt, hat deutliche Komfortnachteile für den Fahrer. Insbesondere ist ein solcher Schließvorgang mit einer deutlich spürbaren Pedalrückwirkung sowie Geräuschen behaftet. Bei Ventilansteuerstrategien, welche keine bzw. nur eine vernachlässigbare Pedalrückwirkung verursachen und keine nennenswerte Geräuschbildung bewirken, ist dagegen mit einer erhöhten Leckage zu rechnen. Daraus ergibt sich ein Zielkonflikt zwischen Geräusch und Dichtheit.
Die Lösung dieses Zielkonflikts wird dadurch erreicht, dass die Ventilansteuerstrategie des USV sich adaptiv zu dem Leckageverhalten der Ventile verhält. Je mehr Leckage zu beobachten ist, desto mehr wird die anfänglich komfortorientierte Ansteuerung aufgegeben und durch eine dichtheitsorientierte Ansteuerung ersetzt.

Als Beispiel für eine Ansteuerstrategie, welche ein hohes Maß an Sicherheit bei bestmöglichem Komfort bietet, kann der folgende Ablauf diesen.

### Schritt 1: komfortorientierte Aktivierung der Fahrzeughaltefunktion:

Bei der Aktivierung der Funktion wird eine Ventilansteuerung gewählt, die dem gewünschten Komfort entspricht. Da die hier gewählte Art der Ventilansteuerung bei jeder Aktivierung abläuft, steht hier der Wunsch nach einer möglichst rückwirkungsfreien und leisen Ansteuerung im Vordergrund. Dabei müssen jedoch Nachteile bzgl. der Dichtheit in Kauf genommen werden.

### Schritt 2: Leckageerkennung und komfortorientierte Leckagekompensation:

Wird erstmals ein Druckabfall in den Radbremszylindern erkannt, beispielsweise über Kreisdrucksensoren bzw. Radzylinderdrucksensoren, wird der gewünschte Solldruck über einen aktiven Druckaufbau wieder hergestellt. Dieser Druckaufbau kann zu einem leichten Öffnen der Umschaltventile führen. Das sichere Schließen der Ventile nach dem Druckaufbau wird für die ersten N Leckagekompensationen durch eine kurze starke Überbestromung der Ventile erreicht, beispielsweise durch einen Schließpuls. Diese Strompulse sind so bemessen, dass sie ein hohes Maß an Komfort, d.h. ein möglichst geringes Geräusch, garantieren. N ist eine vorgegebene Zahl.

### Schritt 3: Leckageerkennung und dichtheitsorientierte Leckagekompensation:

Tritt weiterhin Leckage auf, d.h. auch nach N erfolgten Leckagekompensationen gemäß Schritt 2 tritt eine erneute Leckage auf, dann kann die Ansteuerung durch einen einleitenden Öffnungspuls vor dem Schließpuls erweitert werden. Dieser Schließvorgang ist zwar lauter, jedoch begünstigt er das Dichtverhalten der Ventile. Während in Schritt 2 das geschlossene Ventil im geschlossenen Zustand kurz überbestromt wird, um die Ventilnadel noch stärker in den Ventilsitz zu drücken, wird gemäß Schritt 3 das Ventil kurzzeitig zumindest teilweise wieder geöffnet und dann mit erhöhter Kraft erneut geschlossen. Die vorige Öffnungsstrecke wird beim erneuten Schließen für die Beschleunigung der Ventilnadel verwendet.

### Schritt 4: dichtheitsorientierte Rollüberwachung:

Rollt das Fahrzeug aufgrund weiterem Druckverlust an, dann wird der Bremsdruck solange aktiv erhöht, bis der Fahrzeugstillstand wiederhergestellt ist. Beim abschließenden Schließen der Ventile kann die dichtheitsorientierte Ansteuerung verwendet werden, da der Fahrerkomfort hier eine untergeordnete Priorität hat. Weiterhin kann es sinnvoll sein, die Drehzahl der Rückförderpumpen (in Fig. 1 mit 110 bezeichnet) anzuheben, um einen schnelleren Druckaufbau zu erreichen.

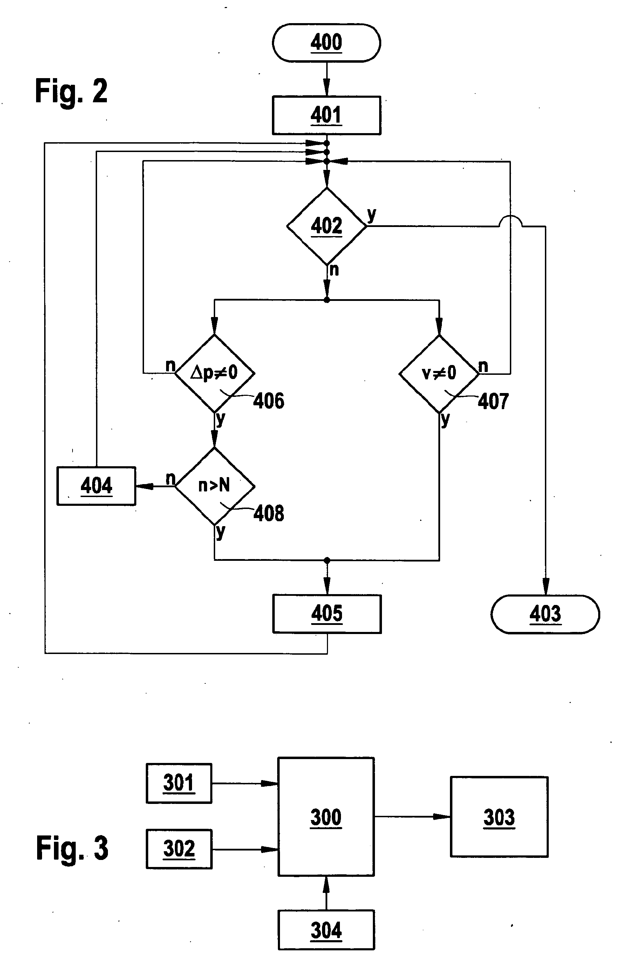

Der Ablauf einer Ausführungsform des erfindungsgemäßen Verfahrens ist in Fig. 2 dargestellt. Nach dem Start in Block 400 wird in Block 401 das Umschaltventil im Rahmen einer eingeleiteten Stillstandshaltefunktion das erste Mal geschlossen. Anschließend wird in Block 402 abgefragt, ob die Haltefunktion beendet werden soll. Lautet die Antwort "ja" (in Fig. 2 mit "y" gekennzeichnet), dann wird in Block 403 das Verfahren beendet. Lautet die Antwort "nein" (in Fig. 2 mit "n" gekennzeichnet), dann wird parallel
- in Block 406 abgefragt, ob eine Leckage auftritt (Δp ≠ 0) und
- in Block 407 abgefragt, ob das Fahrzeug anzurollen beginnt (v ≠ 0).
Tritt gemäß Block 406 keine Leckage auf, dann wird zum Eingang von Block 402 zurückgegangen. Tritt gemäß Block 406 jedoch Leckage auf, dann wird in Block 408 abgefragt, ob n > N ist. Ist dies nicht der Fall, d.h. n ≤ N, dann wird in Block 404 das Umschaltventil nochmals stärker bestromt bzw. überbestromt, um die Ventilnadel in den Dichtsitz zu drücken. Weiter findet in Block 404 ein erneuter Druckaufbau durch die Rückförderpumpe statt, um den aufgetretenen Druckverlust zu kompensieren. N kennzeichnet dabei die aufgetretene Anzahl dieser stärkeren Bestromungen, N deren maximal erlaubte Anzahl. Im Anschluss an Block 404 wird zum Eingang von Block 402 zurückgekehrt. Ist die Abfrage in Block 408 erfüllt, d.h. es wurden bereits mehr als N stärkere Bestromungen durchgeführt und dennoch tritt noch Leckage auf, dann wird in Block 405 das Umschaltventil mittels eines zweiten Ansteuerverfahrens angesteuert: Dazu wird das Ventil wenigstens teilweise geöffnet und dann erneut geschlossen. In Block 405 findet auch ein Druckaufbau durch die Pumpe statt.
Im Anschluss an Block 405 wird zum Eingang von Block 402 zurückgekehrt.
Wird in Block 407 keine vorliegende Anrollbewegung des Fahrzeugs detektiert, dann wird zum Eingang von Block 402 zurückgekehrt. Wird jedoch eine beginnende Anrollbewegung festgestellt, dann wird zu Block 405 weitergegangen.

Der Aufbau einer vorteilhaften Vorrichtung ist in Fig. 3 dargestellt. Dabei kennzeichnet Block 300 ein Steuergerät, welches das Ventil 303 ansteuert. Dabei erhält Block 300 wenigstens die folgenden Eingangssignale:
- Block 301 umfasst z.B. einen Drucksensor liefert den Wert des momentanen Bremsdrucks.
- Block 302 umfasst z.B. einen Raddrehzahlsensor und liefert eine Information, ob das Fahrzeug momentan steht oder rollt.
- Block 304 liefert dem Steuergerät die Information, ob eine Stillstandshaltefunktion momentan durchgeführt werden soll oder nicht.

## Patentansprüche

1. Verfahren zur Ansteuerung eines Ventils (303) zur Aufrechterhaltung von Bremsdruck in einem vorgegebenen Bereich eines Bremskreises bei einem Kraftfahrzeug , welches zur Durchführung einer Fahrzeugstillstandshaltefunktion des Kraftfahrzeugs angewandt wird, bei dem
- das Ventil (303) mittels eines ersten Ansteuerverfahrens angesteuert wird (401),
- der vorgegebene Bereich des Bremskreises bzgl. des Auftretens von Bremsdruckverlust überwacht wird (406) und
- bei einem detektierten Bremsdruckverlust das Ventil mittels eines zweiten Ansteuerverfahrens angesteuert wird (405),
**dadurch gekennzeichnet, dass**
- das zweite Ansteuerverfahren (405) dann durchgeführt wird, wenn das erste Ansteuerverfahren (401) mehrfach, insbesondere eine vorgegebene Anzahl von Malen, durchgeführt wurde und nach jeder dieser Durchführungen erneut ein Druckverlust detektiert wurde (406).

2. Verfahren nach Anspruch 1, **dadurch gekennzeichnet,**
- **dass** es sich bei dem Ventil (303) um das zwischen dem Ausgang des Hauptbremszylinders (112) und den Einlassventilen (EV) der Radbremszylinder (111) angeordnete Umschaltventil (USV) in einem Bremskreis handelt und
- **dass** es sich bei dem vorgegebenen Bereich um den Bereich zwischen dem Umschaltventil (USV) und den Einlassventilen (EV) der Radbremszylinder (111) handelt.

3. Verfahren nach Anspruch 2, **dadurch gekennzeichnet,**
- **dass** beim ersten Ansteuerverfahren das Ventil (303) mittels einer vorgegebenen elektrischen Ansteuerung geschlossen wird oder geschlossen gehalten wird (401) und
- **dass** beim zweiten Ansteuerverfahren das Ventil durch die Ansteuerung wenigstens teilweise wieder geöffnet wird und dann erneut geschlossen wird (405).

4. Verfahren nach Anspruch 1, **dadurch gekennzeichnet, dass** bei einem detektierten Druckverlust der Solldruck über einen fahrerunabhängigen Druckaufbau erneut eingestellt wird.

5. Verfahren nach Anspruch 1, **dadurch gekennzeichnet, dass** bei der ersten Durchführung des ersten Ansteuerverfahrens während einer Druckhaltephase das Ventil (303) geschlossen wird und bei jeder weiteren Durchführung während dieser Druckhaltephase das Ventil geschlossen oder geschlossen gehalten wird (401).

6. Verfahren nach Anspruch 5, **dadurch gekennzeichnet, dass**
dass bei der ersten Durchführung des ersten Ansteuerverfahrens während einer Druckhaltephase das Ventil (303) geschlossen wird und bei jeder weiteren Durchführung während dieser Druckhaltephase das Ventil (303) geschlossen gehalten wird, wobei bei diesen weiteren Durchführungen das Ventil (303) mit einem höheren Strom als bei der ersten Durchführung beaufschlagt wird.

7. Verfahren nach Anspruch 5, **dadurch gekennzeichnet, dass** es sich bei der Druckhaltephase um ein Einsperren des Bremsdrucks im Rahmen einer Fahrzeugstillstandshaltefunktion des Kraftfahrzeugs handelt.

8. Verfahren nach Anspruch 1, **dadurch gekennzeichnet, dass** es sich bei dem vorgegebenen Bereich um einen Radbremszylinder (111) oder den Bereich zwischen einem Radbremszylinder (111) und dem Einlassventil (EV) eines Radbremszylinders handelt.

9. Verfahren nach Anspruch 1, **dadurch gekennzeichnet,**
**dass** für den Fall, dass nach Durchführung des zweiten Ansteuerverfahrens das Fahrzeug dennoch anrollt oder weiterrollt (407), der Bremsdruck fahrerunabhängig erhöht wird (405).

10. Verfahren nach Anspruch 9, **dadurch gekennzeichnet, dass** der Bremsdruck fahrerunabhängig wenigstens solange erhöht wird (405), bis sich ein Fahrzeugstillstand einstellt.

11. Verfahren nach Anspruch 9, **dadurch gekennzeichnet, dass** beim Schließen des Ventils (303) nach der Erhöhung des Bremsdrucks das zweite Ansteuerverfahren verwendet wird.

12. Vorrichtung zur Ansteuerung eines Ventils zur Aufrechterhaltung von Bremsdruck in einem vorgegebenen Bereich eines Bremskreises bei einem Kraftfahrzeug, enthaltend Mittel (300), die derart ausgebildet sind, dass das Verfahren nach einem der vorhergehenden Ansprüche darin ausgeführt wird.

## Claims

1. Method for actuating a valve (303) for maintaining brake pressure in a predefined region of a brake circuit in a motor vehicle, which method is applied for carrying out a vehicle hill-holding function of the motor vehicle, in which method
- the valve (303) is actuated (401) by means of a first actuating method,
- the predefined region of the brake circuit is monitored (406) with regard to the occurrence of brake pressure loss, and,
- if a brake pressure loss is detected, the valve is actuated (405) by means of a second actuating method,
**characterized in that**
- the second actuating method (405) is carried out when the first actuating method (401) has been carried out multiple times, in particular a predefined number of times, and a pressure loss has again been detected (406) after each time it is carried out.

2. Method according to Claim 1, **characterized**
- **in that** the valve (303) is the switchover valve (USV) in a brake circuit, which switchover valve (USV) is arranged between the outlet of the brake master cylinder (112) and the inlet valves (EV) of the wheel brake cylinders (111), and
- **in that** the predefined region is the region between the switchover valve (USV) and the inlet valves (EV) of the wheel brake cylinders (111).

3. Method according to Claim 2, **characterized**
- **in that,** in the first actuating method, the valve (303) is closed or held in a closed state (401) by means of a predefined electrical actuation, and
- **in that**, in the second actuating method, the valve is opened again at least partially and then closed again (405) by the actuation.

4. Method according to Claim 1, **characterized in that,** if a pressure loss is detected, the setpoint pressure is set again via a pressure build-up which is independent of the driver.

5. Method according to Claim 1, **characterized in that,** when the first actuating method is carried out for the first time, the valve (303) is closed during a pressure holding phase and, when it is carried out each further time, the valve is closed or held in a closed state (401) during this pressure holding phase.

6. Method according to Claim 5, **characterized in that,** when the first actuating method is carried out for the first time, the valve (303) is closed during a pressure holding phase and, when it is carried out each further time, the valve (303) is held in a closed state during this pressure holding phase, the valve (303) being loaded with a higher current when said actuating method is carried out further times than when it was carried out for the first time.

7. Method according to Claim 5, **characterized in that** the pressure holding phase is locking in the brake pressure in the context of a vehicle hill-holding function of the motor vehicle.

8. Method according to Claim 1, **characterized in that** the predefined region is a wheel brake cylinder (111) or the region between a wheel brake cylinder (111) and the inlet valve (EV) of a wheel brake cylinder.

9. Method according to Claim 1, **characterized in that** the brake pressure is increased (405) independently of the driver for the case where, after the second actuating method has been carried out, the vehicle nevertheless starts to roll or continues to roll (407).

10. Method according to Claim 9, **characterized in that** the brake pressure is increased (405) independently of the driver at least until a vehicle standstill is achieved.

11. Method according to Claim 9, **characterized in that** the second actuating method is used when the valve is closed (303) after the brake pressure is increased.

12. Apparatus for actuating a valve for maintaining brake pressure in a predefined region of a brake circuit in a motor vehicle, comprising means (300) which are configured in such a way that the method according to one of the preceding claims is executed in them.

## Revendications

1. Procédé de commande d'une soupape (303) pour le maintien de la pression de freinage dans une plage prédéfinie d'un circuit de freinage d'un véhicule automobile, lequel est utilisé pour mettre en oeuvre une fonction de maintien à l'arrêt du véhicule automobile, dans lequel :
- la soupape (303) est commandée (401) au moyen d'un premier procédé de commande,
- la plage prédéfinie du circuit de freinage est contrôlée (406) pour déterminer la présence d'une perte de pression de freinage et
- si une perte de pression de freinage est détectée, la soupape est commandée (405) au moyen d'un deuxième procédé de commande,
**caractérisé en ce que**
- le deuxième procédé de commande (405) est alors mis en oeuvre si le premier procédé de commande (401) a été exécuté plusieurs fois, en particulier un nombre de fois prédéterminé, et qu'une perte de pression a été à nouveau détectée (406) après chacune de ces mises en oeuvre.

2. Procédé selon la revendication 1, **caractérisé en ce que**
- la soupape (303) est la soupape d'inversion (USV) d'un circuit de freinage disposée entre la sortie du cylindre de frein principal (112) et les soupapes d'entrée (EV) du cylindre de frein de roue (111) et
- la plage prédéfinie est la plage entre la soupape d'inversion (USV) et les soupapes d'entrée (EV) du cylindre de frein de roue (111).

3. Procédé selon la revendication 2, **caractérisé en ce que**
- pendant le premier procédé de commande, la soupape (303) est fermée au moyen d'une commande électrique prédéfinie ou est maintenue fermée (401), et
- pendant le deuxième procédé de commande, la soupape est à nouveau ouverte au moins en partie par la commande et est à nouveau refermée (405).

4. Procédé selon la revendication 1, **caractérisé en ce que** dans le cas de la détection d'une perte de pression, la pression de consigne est à nouveau ajustée par le biais d'une augmentation de pression indépendante du conducteur.

5. Procédé selon la revendication 1, **caractérisé en ce que** dans le cas de la première mise en oeuvre du premier procédé de commande pendant une phase de maintien de la pression, la soupape (303) est fermée et pour chaque mise en oeuvre ultérieure pendant cette phase de maintien de la pression, la soupape est fermée ou maintenue fermée (401).

6. Procédé selon la revendication 5, **caractérisé en ce que** dans le cas de la première mise en oeuvre du premier procédé de commande pendant une phase de maintien de la pression, la soupape (303) est fermée et pour chaque mise en oeuvre ultérieure pendant cette phase de maintien de la pression, la soupape (303) est maintenue fermée, et pendant ces mises en oeuvre ultérieures la soupape (303) est sollicitée avec un courant plus important que pendant la première mise en oeuvre.

7. Procédé selon la revendication 5, **caractérisé en ce que** la phase de maintien de la pression est un blocage de la pression de freinage dans le cadre d'une fonction de maintien à l'arrêt du véhicule automobile.

8. Procédé selon la revendication 1, **caractérisé en ce que** la plage prédéfinie est un cylindre de frein de roue (111) ou la région entre un cylindre de frein de roue (111) et la soupape d'entrée (EV) d'un cylindre de frein de roue.

9. Procédé selon la revendication 1, **caractérisé en ce que** dans le cas où après la mise en oeuvre du deuxième procédé de commande, le véhicule avance ou continue d'avancer (407), la pression de freinage est augmentée (405) indépendamment du conducteur.

10. Procédé selon la revendication 9, **caractérisé en ce que** la pression de freinage est augmentée (405) indépendamment du conducteur jusqu'à ce qu'un arrêt du véhicule s'établisse.

11. Procédé selon la revendication 9, **caractérisé en ce que** lors de la fermeture de la soupape (303), après l'augmentation de la pression de freinage, le deuxième procédé de commande est utilisé.

12. Dispositif de commande d'une soupape pour maintenir la pression de freinage dans une plage prédéfinie d'un circuit de freinage d'un véhicule automobile, comprenant des moyens (300) qui sont réalisés de telle sorte que le procédé selon l'une quelconque des revendications précédentes y soit mis en oeuvre.
